# EUROPÄISCHE PATENTSCHRIFT

(11) **EP 4 363 807 B1**
(45) Veröffentlichungstag und Bekanntmachung des Hinweises auf die Patenterteilung: **12.11.2025**
(21) Anmeldenummer: 22735905.6
(22) Anmeldetag: 28.06.2022
(51) Int. Cl.: G01F 1/84, G01F 25/10

(54) **VERFAHREN ZUM BETREIBEN EINES CORIOLIS-MESSGERÄTS**
METHOD OF OPERATING A CORIOLIS MEASURING DEVICE
PROCÉDÉ DE FONCTIONNEMENT D'UN DISPOSITIF DE MESURE CORIOLIS

(30) Priorität: 01.07.2021 DE 102021117028
(43) Veröffentlichungstag der Anmeldung: 08.05.2024
(73) Patentinhaber: Endress+Hauser Flowtec AG, 4153 Reinach (CH)
(72) Erfinder: ZHU, Hao, 85354 Freising (DE); ECKERT, Gerhard, 79639 Grenzach-Wyhlen (DE)
(74) Vertreter: Endress + Hauser Group Services (Deutschland) AG+Co. KG
(86) Internationale Anmeldenummer: PCT/EP2022/067719
(87) Internationale Veröffentlichungsnummer: WO 2023/275045

(56) Entgegenhaltungen:
- DE-A1- 102017 006 710

## Beschreibung

Die Erfindung betrifft ein Verfahren zum Betreiben eines Coriolis-Messgeräts zum Messen eines Massedurchflusses und/oder einer Dichte eines durch eine Rohrleitung strömenden Mediums.

Coriolis-Messgeräte, wie beispielsweise in der DE102017125273A1 gezeigt, werden üblicherweise vor einer ersten Inbetriebnahme kalibriert, wobei das Coriolis-Messgerät mit einem genau bemessenen Massedurchfluss beaufschlagt wird, um diesen mit Messsignalen von Sensoren zur Erfassung von Messrohrschwingungen abzugleichen. Auf Kundenseite besteht hin und wieder der Bedarf zu überprüfen, ob das Coriolis-Messgerät zu einem aktuellen Zeitpunkt noch gut kalibriert ist bzw. Bedarf an einer Neukalibration. Dabei wird das Coriolis-Messgerät aus Zeitgründen jedoch häufig mit großen Massedurchflüssen beaufschlagt, um die Überprüfung / Neukalibration schnell zu beenden. Dies hat jedoch eine verschlechterte Messsignalqualität beim Coriolis-Messgerät aufgrund verstärkten Signalrauschens zur Folge, was dazu führen kann, dass das Coriolis-Messgerät unzureichend überprüft / kalibriert wird.

Die DE 10 2017 006710 A1 offenbart in diesem Hinblick ein Verfahren zum Betreiben eines Coriolis-Messgeräts, bei dem die Erregerleistung mit zunehmendem Durchfluss des Fluids erhöht wird.

Aufgabe der Erfindung ist es daher ein Verfahren vorzuschlagen, welches ein korrektes Überprüfungsergebnis bzw. eine korrekte Kalibration sicherstellt.

Die Aufgabe wird gelöst durch ein Verfahren gemäß dem unabhängigen Anspruch 1.

Das erfindungsgemäße Verfahren dient zum Betreiben eines Coriolis-Messgeräts zum Messen eines Massedurchflusses und/oder einer Dichte eines durch eine Rohrleitung strömenden Mediums,
wobei das Coriolis-Messgerät umfasst:
zumindest ein Messrohr zum Führen eines Mediums,
zumindest einen Erreger zum Erzeugen von Messrohrschwingungen,
zumindest einen ersten Sensor und insbesondere zumindest einen zweiten Sensor zum Erfassen von Messrohrschwingungen,
eine elektronische Mess-/Betriebsschaltung zum Betreiben des Erregers und zum Erfassen und Auswerten von Messsignalen der Sensoren sowie zum Bereitstellen von Messwerten des Massedurchflusses und/oder der Dichte,
wobei das Verfahren folgende Schritte umfasst:
   In einem ersten Verfahrensschritt Überprüfen, ob ein Betrag eines Messwerts zumindest einer Prüfgröße einen ersten Grenzwert oder eine Streuung von Messwerten einer Prüfgröße einen zweiten Grenzwert überschreitet,
   und Erhöhen einer Schwingungsamplitude der Messrohrschwingungen um einen Faktor E durch Steigerung einer Erregerleistung in einem zweiten Verfahrensschritt bei Überschreitung eines Grenzwerts,
   wobei die Prüfgröße auf der folgenden Größe basiert:
      Durchflussgeschwindigkeit,
      wobei für G1 gilt:
         Durchflussgeschwindigkeit im Messrohr größer 4 m/s, insbesondere größer als 4.5 m/s, bevorzugt größer als 5m/s,
         wobei für G2 gilt:
            Streuung von Durchflussgeschwindigkeit im Messrohr ist
            in einem Zeitintervall von mindestens 0.5 Sekunden, insbesondere mindestens 1 Sekunden bevorzugt mindestens 2 Sekunden
            größer als 150%, insbesondere größer als 175% und bevorzugt größer als 200% eines Referenzwerts.

Die Streuung von Messwerten der Messröße kann beispielsweise über Summieren von Abständen benachbarter Messwerte über ein Zeitintervall bestimmt werden. Es kann aber auch beispielsweise eine Standardabweichung über ein Zeitintervall bestimmt werden. Der zweite Grenzwert bzw. Referenzwert kann beispielsweise aus Erfahrung abgeleitet sein und/oder durch eine Kalibration beispielsweise bei erstmaliger Inbetriebnahme des Coriolis-Messgeräts bestimmt sein.

In einer Ausgestaltung ist E mindestens 1.1, und bevorzugt mindestens 1.3 und insbesondere mindestens 1.5
und/oder wobei
E ist höchstens 4, und bevorzugt höchstens 3 und insbesondere höchstens 2.5.

Auf diese Weise kann ein Verhältnis von Signal zu Rauschen deutlich verbessert werden, so dass eine Kalibration sauber und robust durchgeführt wird. Durch Einrichten eines Maximalwerts kann eine Messrohrüberlastung verhindert werden.

Erfindungsgemäß ist eine Zeitdauer bzw. eine Anzahl von Messrohrschwingungen eines Zyklus einer Erhöhung der Schwingungsamplitude begrenzt.

Auf diese Weise kann ein Überlastungsversagen des mindestens einen Messrohrs vermieden werden. Typischerweise dauern Überprüfungsszenarien bzw. Testszenarien nur kurze Zeit, so dass eine einzelne Überprüfung typischerweise weniger Zeit in Anspruch nimmt, als eine Begrenzung B der Zeitdauer bzw. der Anzahl von Messrohrschwingungen zulässt. Ein Ausreizen der Begrenzung führt nicht zu einem Messrohrversagen. Der Fachmann greift dabei beispielsweise auf Literatur zurück, in welchem ein Zusammenhang zwischen Materialstress und Materialermüdung angegeben ist. Der Fachmann findet solcherlei Angaben beispielsweise in ASME, Section VIII, Div. 2, Code Edition 2001, siehe beispielsweise Curve 110.2.1.

Das Messrohr ist dabei bevorzugt aus einem legierten Stahl, insbesondere einem hochlegierten Stahl gefertigt.

Erfindungegmäß wird eine Überbelastung berechnet anhand einer Gesamtzeit der Erhöhung der Schwingungsamplitude bzw. einer Anzahl von Messrohrschwingungen mit erhöhter Schwingungsamplitude über alle Zyklen und anhand der jeweiligen Erhöhung.

Auch die Berechnung der Überbelastung kann auf den oben genannten Zusammenhang zurückgreifen.

In einer Ausgestaltung wird falls die Überbelastung einen Grenzwert überschreitet, eine Warnmeldung ausgegeben.

In einer Ausgestaltung wird die Erhöhung der Schwingungsamplitude mit Unterschreiten des ersten Grenzwerts und/oder eines dritten Grenzwerts betreffend die Streuung der Messgröße beendet.

Der dritte Grenzwert kann ähnlich wie der zweite Grenzwert bestimmt werden. Mit Unterschreiten einer Mindeststreuung kann ein Anlass gegeben sein, die Signalamplitude wieder auf einen normalen Wert zu reduzieren.

In einer Ausgestaltung ist der Faktor E von einem Maß der Überschreitung des ersten Grenzwerts und/oder zweiten Grenzwerts abhängig.

Auf diese Weise können eine zu geringe Erhöhung sowie eine übermäßige Belastung des Messrohrs verhindert werden.

In einer Ausgestaltung weisen der Erreger sowie die Sensoren jeweils eine Spulenvorrichtung mit mindestens einer Spule und jeweils eine Magnetvorrichtung mit mindestens einem Magnet auf. Die Erregung von Messrohrschwingungen basiert auf der Erzeugung von elektromagnetischen Abstoßungskräften zwischen Spule und Magnet durch einen durch die Spule fließenden elektrischen Wechselstrom. Eine Erhöhung einer Amplitude des Wechselstroms hat eine Erhöhung der Schwingungsamplitude zur Folge.

Umgekehrt nutzt man bei den Sensoren eine elektromagnetische Induktion einer Spannung und somit eines Stroms in der Spule aus, Messrohrschwingungen zu detektieren.

In einer Ausgestaltung wird der Referenzwert in der elektronischen Mess-/Betriebsschaltung abgelegt ist und beispielsweise durch eine Kalibration bei einer erstmaligen Inbetriebnahme des Coriolis-Messgeräts bestimmt.

Im Folgenden wird die Erfindung anhand von Ausführungsbeispielen beschrieben.
Fig. 1 beschreibt ein beispielhaftes Coriolis-Messgerät;
Fig. 2 zeigt beispielhafte schematische Verläufe einer Messgröße und einer Signalamplitude;
Fig. 3 skizziert den Ablauf eines erfindungsgemäßen Verfahrens;

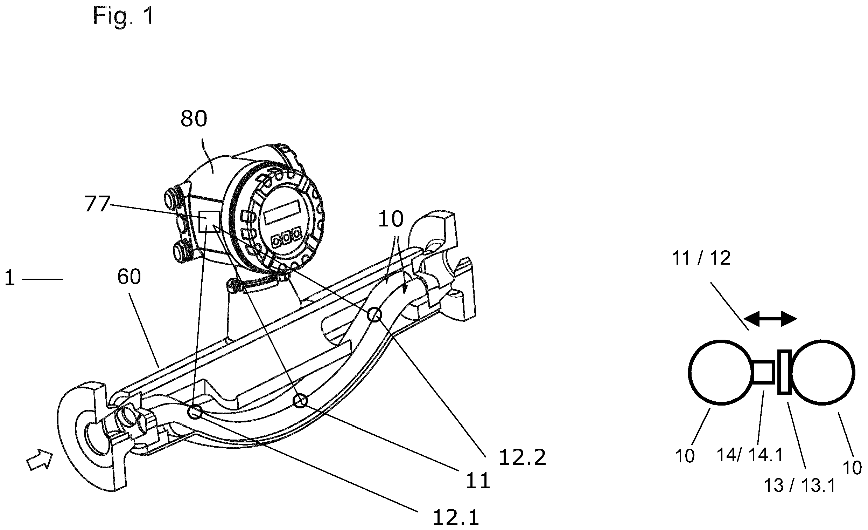

Fig. 1 zeigt ein beispielhaftes Coriolis-Messgerät 1 zum Messen eines Massedurchflusses oder einer Dichte eines durch eine Rohrleitung strömenden Mediums umfassend zwei Messrohre 10 mit jeweils einem Einlauf 10.1 und einem Auslauf 10.2, wobei eine Messrohrwandung 10.4 ein Messrohrlumen 10.3 einschließt. Die Messrohre werden durch einen Erreger 11 zum Schwingen angeregt, ein einlaufseitiger erster Sensor 12.1 und ein auslaufseitiger zweiter Sensor 12.2 erfassen die Messrohrschwingungen und erzeugen Messsignale, welche durch eine in einem Gehäuse 80 angeordnete elektronische Mess-/Betriebsschaltung 77 ausgewertet werden. Die Messrohre werden dabei durch einen Trägerkörper gehalten. Sensor und Erreger können dabei wie hier gezeigt, jeweils eine Spulenvorrichtung 13 mit einer Spule 13.1 und eine Magnetvorrichtung 14 mit einem Magnet 14.1 aufweisen, wobei Spulenvorrichtung und Magnetvorrichtung durch Messrohrschwingungen Relativbewegungen erfahren. Durch die Relativbewegung werden in der Spule elektrische Spannungen induziert und somit elektrische Ströme verursacht, welche von der elektronischen Mess-/Betriebsschaltung verarbeitet werden. Das Messsignal kann dabei die elektrische Spannung oder der elektrische Strom sein. Da auch bei Coriolis-Messgeräten Ungenauigkeiten bei der Produktion und bei der Fertigung existieren, sind verschiedene Sensoren nicht exakt gleich, so dass sie unter gleichen Bedingungen leicht unterschiedliche Messsignale produzieren, was sich beispielsweise in unterschiedlichen Amplituden von Messsignalen äußert. Diese Asymmetrie zwischen den Sensoren kann als weitere Messgröße genutzt werden, um beispielsweise einen Betriebszustand oder einen Abnutzungszustand des Coriolis-Messgeräts erkennen zu können.

Coriolis-Messgeräte können auch nur ein Messrohr oder auch mehr als zwei Messrohre aufweisen. Ein Fachmann wird den Erreger sowie die Sensoren dann entsprechend anpassen. So ist es nicht nötig, dass Spulenvorrichtung und Magnetvorrichtung jeweils an einem Messrohr angeordnet sind, sondern sie können beispielsweise auch über eine Haltevorrichtung am Trägerkörper befestigt sein. Coriolis-Messgeräte können auch mehr als einen Erreger und/oder auch mehr als zwei Sensoren aufweisen.

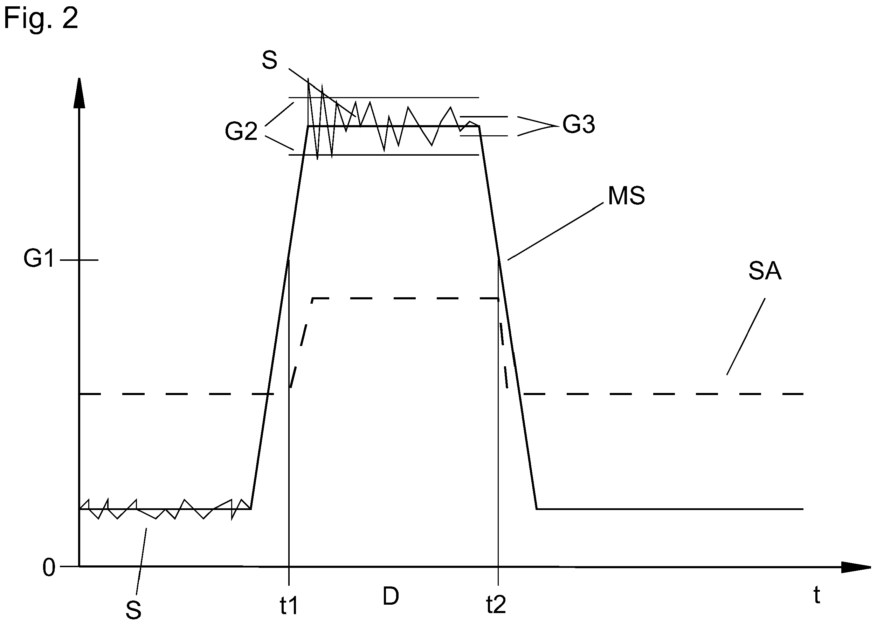

Fig. 2 skizziert einen beispielhaften schematischen Verlauf von Messwerten MS einer Prüfgröße wie Durchflussgeschwindigkeit, Massedurchfluss, Volumendurchfluss, sowie den beispielhaften schematischen Verlauf einer Schwingungsamplitude SA. Der Messwertverlauf überschreitet an einem Zeitpunkt t1 einen ersten Grenzwert G1 und unterschreitet diesen ersten Grenzwert an einem Zeitpunkt t2. Wie angedeutet, kann dieses Überschreiten des Grenzwerts zu einer verstärkten Messwertstreuung S um einen Mittelwert der Messgröße führen, welche im Zeitintervall t1 - t2 entsprechend der Zeitdauer D einen zweiten Grenzwert überschreitet. Die Überschreitung des ersten Grenzwerts G1 und/oder die Überschreitung des zweiten Grenzwerts G2 wird zum Anlass genommen, die Signalamplitude SA um einen Faktor E zu erhöhen, so dass die Streuung den Grenzwert G2 unterschreitet. Der Mittelwert ist dabei ein gleitender Mittelwert.

G1 ist dabei folgendermaßen charakterisiert: Die Durchflussgeschwindigkeit im Messrohr ist größer 4 m/s, insbesondere größer als 4.5 m/s, bevorzugt größer als 5m/s.

G2 ist folgendermaßen charakterisiert: Streuung von Durchflussgeschwindigkeit im Messrohr oder Massedurchfluss oder Volumendurchfluss ist in einem Zeitintervall von mindestens 0.5 Sekunden, insbesondere mindestens 1 Sekunden bevorzugt mindestens 2 Sekunden größer als 150%, insbesondere größer als 175% und bevorzugt größer als 200% eines Referenzwerts.

In einer Ausgestaltung ist E mindestens 1.1, und bevorzugt mindestens 1.3 und insbesondere mindestens 1.5, wobei E höchstens 4, und bevorzugt höchstens 3 und insbesondere höchstens 2.5 ist.

Die Streuung der Messwerte kann beispielsweise über Summieren von Abständen benachbarter Messwerte über ein Zeitintervall bestimmt werden. Es kann aber auch beispielsweise eine Standardabweichung über ein Zeitintervall bestimmt werden. Der zweite Grenzwert kann beispielsweise aus Erfahrung oder auch aus physikalischen Gleichungen abgeleitet sein, welche eine Strömung des Mediums im Messrohr beschreiben. Beispielsweise kann er auch aus einer Kalibration beispielsweise bei einer ersten Inbetriebnahme des Coriolis-Messgeräts bestimmt werden.

Die Erhöhung der Schwingungsamplitude mit Unterschreiten des ersten Grenzwerts und/oder eines dritten Grenzwerts beendet. Der dritte Grenzwert kann ähnlich wie der zweite Grenzwert bestimmt werden. Mit Unterschreiten einer Mindeststreuung kann ein Anlass gegeben sein, die Signalamplitude wieder auf einen normalen Wert zu reduzieren.

Die Zeitdauer D oder eine Anzahl von Messrohrschwingungen eines Zyklus einer Erhöhung der Schwingungsamplitude ist dabei bevorzugt begrenzt, wobei ein Zusammenhang zwischen einer Begrenzung B der Zeitdauer und dem Faktor E der Erhöhung beispielsweise folgendermaßen eingerichtet ist: B ist proportional zu P1*E^(-n) mit n größer oder gleich 1 und P1 als erstem Proportionalitätsfaktor. Der Fachmann kann dabei beispielsweise auch auf Literatur zurückgreifen, in welchem ein Zusammenhang zwischen Materialstress und Materialermüdung angegeben ist. Der Fachmann findet solcherlei Angaben beispielsweise in ASME, Section VIII, Div. 2, Code Edition 2001, siehe beispielsweise Curve 110.2.1. Die Anzahl von Messrohrschwingungen ist dabei proportional zur Zeitdauer D mit einer Schwingungsfrequenz als Proportionalitätsfaktor.

Eine Überbelastung des Messrohrs oder eines Kopplers kann beispielsweise berechnet werden anhand einer Gesamtzeit der Erhöhung der Schwingungsamplitude bzw. Anzahl von Messrohrschwingungen mit erhöhter Schwingungsamplitude über alle Zyklen und anhand der jeweiligen Erhöhung, wobei beispielsweise über Produkte P2*E^(n)*D summiert wird, wobei P2 ein zweiter Proportionalitätsfaktor ist. Auf diese Weise kann ein Überlastungsversagen des mindestens einen Messrohrs vermieden werden. Typischerweise dauern Überprüfungsszenarien bzw. Testszenarien nur kurze Zeit, so dass eine einzelne Überprüfung typischerweise weniger Zeit in Anspruch nimmt, als die Begrenzung B zulässt. Ein Ausreizen der Begrenzung führt nicht zu einem Messrohrversagen. Der Proportionalitätsfaktor P1 und/oder E und/oder P2 können dabei aus materialwissenschaftlichen Kenntnissen abgeleitet werden, welche beispielsweise aus der oben genannten Literatur bekannt sind.

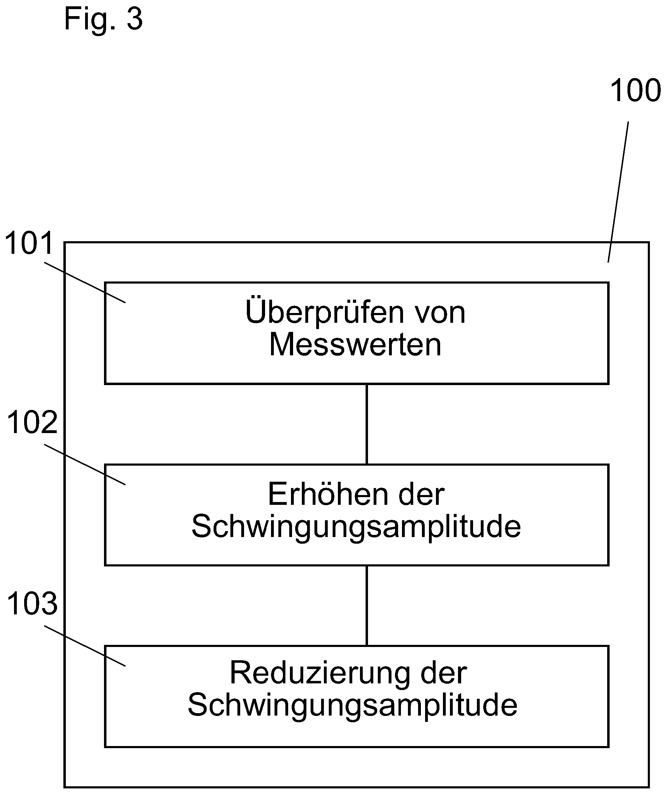

Fig. 3 skizziert den Ablauf eines beispielhaften erfindungsgemäßen Verfahrens, wobei in einem ersten Verfahrensschritt 101 geprüft wird, ob ein Messwert einer der folgenden Prüfgrößen des Mediums: Durchflussgeschwindigkeit, Massedurchfluss, Volumendurchfluss den ersten Grenzwert G1 überschreitet, oder ob die Streuung S eines Messwerts den zweiten Grenzwert G2 überschreitet.

In einem zweiten Verfahrensschritt 102 wird bei Überschreiten des ersten Grenzwerts oder des zweiten Grenzwerts die Schwingungsamplitude SA der Messrohrschwingungen um einen Faktor E durch Steigerung einer Erregerleistung erhöht.

In einem dritten Verfahrensschritt 103 wird die Erhöhung der Schwingungsamplitude SA mit Unterschreiten des ersten Grenzwerts und/oder eines dritten Grenzwerts G3 betreffend die Streuung des Messsignals beendet.

### Bezugszeichenliste

- 1: Coriolis-Messgerät
- 10: Messrohr
- 11: Erreger
- 12.1: erster Sensor
- 12.2: zweiter Sensor
- 13: Spulenvorrichtung
- 13.1: Spule
- 14: Magnetvorrichtung
- 14.1: Magnet
- 15: elektronische Mess-/Betriebsschaltung
- 16: Temperatursensor
- 60: Trägerkörper
- 77: elektronische Mess-/Betriebsschaltung
- 80: Gehäuse
- 100: Verfahren
- 101: Verfahrensschritt
- 102: Verfahrensschritt
- 103: Verfahrensschritt
- D: Zeitdauer
- G1: erster Grenzwert
- G2: zweiter Grenzwert
- G3: dritter Grenzwert
- MS: Messgröße / Messwertverlauf der Messgröße
- S: Streuung
- SA: Schwingungsamplitude

## Patentansprüche

1. Verfahren (100) zum Betreiben eines Coriolis-Messgeräts (1) zum Messen eines Massedurchflusses und/oder einer Dichte eines durch eine Rohrleitung strömenden Mediums,
wobei das Coriolis-Messgerät umfasst:
zumindest ein Messrohr (10) zum Führen eines Mediums,
zumindest einen Erreger (11) zum Erzeugen von Messrohrschwingungen,
zumindest einen ersten Sensor (12.1) und insbesondere zumindest einen zweiten Sensor (12.2) zum Erfassen von Messrohrschwingungen,
sowie eine elektronische Mess-/Betriebsschaltung (77) zum Betreiben des Erregers und zum Erfassen und Auswerten von Messsignalen der Sensoren sowie zum Bereitstellen von Messwerten des Massedurchflusses und/oder der Dichte,
wobei das Verfahren folgende Schritte umfasst:
in einem ersten Verfahrensschritt (101) Überprüfen, ob ein Betrag eines Messwerts (MS) zumindest einer Prüfgröße einen ersten Grenzwert (G1) oder eine Streuung von Messwerten einer Prüfgröße einen zweiten Grenzwert (G2) überschreitet,
und Erhöhen einer Schwingungsamplitude (SA) der Messrohrschwingungen um einen Faktor E durch Steigerung einer Erregerleistung in einem zweiten Verfahrensschritt (102) bei Überschreitung eines Grenzwerts,
**dadurch gekennzeichnet, daß** eine Zeitdauer oder eine Anzahl von Messrohrschwingungen eines Zyklus einer Erhöhung der Schwingungsamplitude begrenzt ist,
**daß** die Prüfgröße auf der folgenden Größe basiert: Durchflussgeschwindigkeit,
wobei für G1 gilt: Durchflussgeschwindigkeit im Messrohr größer 4 m/s, insbesondere größer als 4.5 m/s, bevorzugt größer als 5 m/s,
und wobei für G2 gilt: Streuung von Durchflussgeschwindigkeit im Messrohr ist in einem Zeitintervall von mindestens 0.5 Sekunden, insbesondere mindestens 1 Sekunde, bevorzugt mindestens 2 Sekunden, größer als 150%, insbesondere größer als 175% und bevorzugt größer als 200% eines Referenzwerts;
**und daß** eine Überbelastung berechnet wird anhand einer Gesamtzeit der Erhöhung der Schwingungsamplitude bzw. eine Anzahl von Messrohrschwingungen mit erhöhter Schwingungsamplitude über alle Zyklen und anhand der jeweiligen Erhöhung.

2. Verfahren nach Anspruch 1,
wobei E mindestens 1.1, und bevorzugt mindestens 1.3 und insbesondere mindestens 1.5 ist; und/oder
wobei E höchstens 4, und bevorzugt höchstens 3 und insbesondere höchstens 2.5 ist.

3. Verfahren nach einem der vorherigen Ansprüche, wobei falls die Überbelastung einen Grenzwert überschreitet, eine Warnmeldung ausgegeben wird, und insbesondere die Erhöhung der Schwingungsamplitude beendet wird.

4. Verfahren nach einem der vorigen Ansprüche, wobei die Erhöhung der Schwingungsamplitude (SA) mit Unterschreiten des ersten Grenzwerts und/oder eines dritten Grenzwerts (G3) betreffend die Streuung des Messsignals in einem dritten Verfahrensschritt (103) beendet wird.

5. Verfahren nach einem der vorigen Ansprüche, wobei E von einem Maß der Überschreitung des ersten Grenzwerts und/oder zweiten Grenzwerts abhängig ist.

6. Verfahren nach einem der vorigen Ansprüche, wobei eine Mitteilung ausgegeben wird, sobald die Erhöhung der Schwingungsamplitude zurückgefahren wird.

7. Verfahren nach einem der vorigen Ansprüche, wobei der Erreger (11) sowie die Sensoren (12.1, 12.2) jeweils eine Spulenvorrichtung (13) mit mindestens einer Spule (13.1) und jeweils eine Magnetvorrichtung (14) mit mindestens einem Magnet (14.1) aufweisen.

8. Verfahren nach einem der vorigen Ansprüche, wobei der Referenzwert in der elektronischen Mess-/Betriebsschaltung abgelegt ist und beispielsweise durch eine Kalibration bei einer erstmaligen Inbetriebnahme des Coriolis-Messgeräts (1) bestimmt wird.

## Claims

1. A method (100) for operating a Coriolis measuring device (1) for measuring a mass flow and/or a density of a medium flowing through a pipeline,
wherein the Coriolis measuring device comprises:
At least one measuring tube (10) for conducting a medium,
at least one exciter (11) for generating measuring tube oscillations, at least one first sensor (12.1), and in particular at least one second sensor (12.2) for detecting measuring tube oscillations,
as well as an electronic measuring/operating circuit (77) for operating the exciter and for recording and analyzing measurement signals from the sensors as well as for supplying measured values relating to the mass flow and/or the density,
wherein the method comprises the following steps:
In a first process step (101), checking whether an amount of a measured value (MS) of at least one test variable exceeds a first limit value (G1) or a dispersion of measured values of a test variable exceeds a second limit value (G2),
and increasing an oscillation amplitude (SA) of the measuring tube oscillations by a factor E by increasing an exciter output in a second process step (102) if a limit value is exceeded, **characterized in that** a duration or a number of measuring tube oscillations of a cycle in which the oscillation amplitude is increased is limited,
**in that** the test variable is based on the following variable: Flow velocity, wherein the following applies to G1: The flow velocity in the measuring tube is greater than 4 m/s, in particular greater than 4.5 m/s, preferably greater than 5 m/s,
and wherein the following applies to G2: The dispersion of the flow velocity in the measuring tube is more than 150%, in particular more than 175%, and preferably more than 200% of a reference value, at a time interval of at least 0.5 seconds, in particular at least 1 second, preferably at least 2 seconds;
and **in that** an overload is calculated based on a total time for which the oscillation amplitude is increased or a number of measuring tube oscillations with increased oscillation amplitude over all cycles and based on the respective increase.

2. The method as claimed in claim 1,
wherein E is at least 1.1, and preferably at least 1.3, and in particular is at least 1.5; and/or
wherein E is at most 4, and preferably at most 3, and in particular at most 2.5.

3. The method as claimed in one of the preceding claims, wherein if the overload exceeds a limit value, a warning message is issued and, in particular, the increase in the oscillation amplitude is ended.

4. The method as claimed in one of the preceding claims, wherein the increase in the oscillation amplitude (SA) if the level is below the first limit value and/or a third limit value (G3) relating to the dispersion of the measurement signal is ended in a third process step (103).

5. The method as claimed in one of the preceding claims, wherein E is dependent on the degree to which the first limit value and/or the second limit value is/are exceeded.

6. The method as claimed in one of the preceding claims, wherein a notification is issued as soon as the oscillation amplitude stops being increased.

7. The method as claimed in one of the preceding claims, wherein the exciter (11) and the sensors (12.1, 12.2) each have a coil device (13) with at least one coil (13.1) and a magnetic device (14) with at least one magnet (14.1).

8. The method as claimed in one of the preceding claims, wherein the reference value is stored in the electronic measuring/operating circuit and is calculated, for example, by means of a calibration when the Coriolis measuring device (1) is put into operation for the first time.

## Revendications

1. Procédé (100) destiné à faire fonctionner un débitmètre Coriolis (1) en vue de mesurer un débit massique et/ou une densité d'un produit s'écoulant dans une conduite, le débitmètre Coriolis comprenant :
au moins un tube de mesure (10) destiné à guider un produit,
au moins un excitateur (11) destiné à générer des vibrations du tube de mesure,
au moins un premier capteur (12.1) et notamment au moins un deuxième capteur (12.2) destiné à mesurer les vibrations du tube de mesure,
ainsi qu'un circuit électronique de mesure/fonctionnement (77) destiné à faire fonctionner l'excitateur et à mesurer et évaluer les signaux de mesure des capteurs ainsi qu'à fournir des valeurs mesurées du débit massique et/ou de la densité,
le procédé comprenant les étapes suivantes :
dans une première étape de procédé (101), vérifier si une valeur mesurée (MS) d'au moins une grandeur de contrôle dépasse une première valeur limite (G1) ou si une dispersion des valeurs mesurées d'une grandeur de contrôle dépasse une deuxième valeur limite (G2),
et augmentation d'une amplitude de vibration (SA) des vibrations du tube de mesure d'un facteur E par augmentation d'une puissance d'excitation dans une deuxième étape de procédé (102) en cas de dépassement d'une valeur limite ;
**caractérisé**
**en ce qu'**une durée ou un nombre de vibrations du tube de mesure d'un cycle d'augmentation de l'amplitude de vibration est limité,
**en ce que** la grandeur de contrôle est basée sur la grandeur suivante : vitesse d'écoulement
où pour G1 : la vitesse d'écoulement dans le tube de mesure est supérieure à 4 m/s, notamment supérieure à 4,5 m/s, de préférence supérieure à 5 m/s,
et où pour G2 : la dispersion de la vitesse d'écoulement dans le tube de mesure est supérieure à 150 %, notamment supérieure à 175 % et de préférence supérieure à 200 % d'une valeur de référence dans un intervalle de temps d'au moins 0,5 seconde, notamment d'au moins 1 seconde, de préférence d'au moins 2 secondes ;
et **en ce qu'**une surcharge est calculée à partir d'un temps total d'augmentation de l'amplitude de vibration ou d'un nombre de vibrations du tube de mesure avec une amplitude de vibration accrue sur tous les cycles et à partir de l'augmentation respective.

2. Procédé selon la revendication 1,
pour lequel E est au moins égal à 1,1, et de préférence au moins égal à 1,3 et notamment au moins égal à 1,5 ; et/ou
pour lequel E est au plus égal à 4, et de préférence au plus égal à 3 et notamment au plus égal à 2,5.

3. Procédé selon l'une des revendications précédentes, pour lequel, si la surcharge dépasse une valeur limite, un message d'avertissement est émis et, en particulier, l'augmentation de l'amplitude de vibration est arrêtée.

4. Procédé selon l'une des revendications précédentes, pour lequel l'augmentation de l'amplitude de vibration (SA) est arrêtée dans une troisième étape du procédé (103) lorsque la première valeur limite et/ou une troisième valeur limite (G3) concernant la dispersion du signal de mesure est dépassée par défaut.

5. Procédé selon l'une des revendications précédentes, pour lequel E dépend d'une mesure du dépassement de la première valeur limite et/ou de la deuxième valeur limite.

6. Procédé selon l'une des revendications précédentes, pour lequel un message est émis dès que l'augmentation de l'amplitude de vibration est réduite.

7. Procédé destiné à l'une des revendications précédentes, pour lequel l'excitateur (11) ainsi que les capteurs (12.1, 12.2) comportent chacun un dispositif à bobine (13) avec au moins une bobine (13.1) et un dispositif magnétique (14) avec au moins un aimant (14.1).

8. Procédé destiné à l'une des revendications précédentes, pour lequel la valeur de référence est enregistrée dans le circuit électronique de mesure/fonctionnement et est déterminée, par exemple, par un étalonnage lors de la première mise en service du débitmètre Coriolis (1).
